# FASCICULE DE BREVET EUROPEEN

(11) **EP 2 662 286 B1**
(45) Date de publication et mention de la délivrance du brevet: **04.03.2015**
(21) Numéro de dépôt: 13164713.3
(22) Date de dépôt: 22.04.2013
(51) Int. Cl.: B64D 41/00, F02C 7/26

(54) **Procédé de fourniture de puissance auxiliaire par un groupe auxiliaire de puissance et architecture correspondante**
Einspeisungsverfahren von Hilfsenergie durch ein Hilfsenergieaggregat, und entsprechender Aufbau
Method of supplying auxiliary power from an auxiliary power unit and corresponding architecture

(30) Priorité: 10.05.2012 FR 1254249
(43) Date de publication de la demande: 13.11.2013
(73) Titulaire: Microturbo, 31200 Toulouse (FR)
(72) Inventeur: Rideau, Jean-François, 31170 Tournefeuille (FR); Silet, Fabien, 31140 Pechbonnieu (FR)
(74) Mandataire: Bringer, Mathieu

(56) Documents cités:
- EP-A2- 0 242 162
- EP-A2- 0 957 026
- KR-A- 20040 064 030
- US-A- 3 965 673
- US-A- 4 092 824
- US-A- 5 131 225
- US-A- 5 274 992
- US-A1- 2003 096 150
- US-A1- 2006 102 801

## Description

### DOMAINE TECHNIQUE

L'invention concerne un procédé de fourniture de puissance auxiliaire aux aéronefs par un groupe auxiliaire de puissance, en abrégé APU (initiales de « auxiliary power unit » en terminologie anglaise), ainsi qu'une architecture de fourniture de puissance auxiliaire correspondante.

L'invention s'applique aux moteurs d'aéronefs, c'est-à-dire aussi bien aux moteurs d'avions (turboréacteurs, turbopropulseurs), qu'aux turbomoteurs d'hélicoptères, ainsi qu'aux générateurs de puissances non propulsives.

Les aéronefs sont équipés de moteurs principaux dédiés à la propulsion et, en régime de croisière, à la production d'énergie non propulsive (conditionnement d'air, pressurisation d'air cabine, électricité, etc.). Le groupe APU est un petit turbogénérateur ou moteur auxiliaire qui fournit de l'énergie non propulsive au sol ou en vol, lorsque les moteurs principaux ne sont plus en mesure de fournir de l'énergie non propulsive : par exemple dans le cas où les conditions de vol deviennent difficiles ou pour des phases délicates dans des missions particulières (recherche, milieu hostile, etc.), ou en cas de perte d'un ou plusieurs générateurs intégrés aux moteurs principaux.

L'aéronef est également équipé d'une autre source auxiliaire de puissance de secours à des systèmes spécifiques, en cas d'extrême urgence ou de secours : il s'agit d'une petite éolienne ou petite turbine (appelée RAT, initiales de « ram air turbine » en terminologie anglaise) qui se déploie extérieurement pour fournir de la puissance par couplage à une pompe hydraulique ou à un alternateur. La RAT produit de l'énergie nécessaire aux systèmes vitaux de l'appareil (contrôles de vol, circuits hydrauliques associés et instruments de vol critiques).

### ÉTAT DE LA TECHNIQUE

En général, les moteurs principaux de l'aéronef sont opérationnels, et l'APU ainsi que la RAT ne sont pas utilisés en vol et représentent alors des charges. De plus, la RAT doit répondre à des contraintes de maintenance fortes.

Afin de rentabiliser au moins partiellement la présence de l'APU, des solutions ont été proposées pour utiliser cet équipement comme source d'énergie non propulsive pendant le vol. Des demandes de brevet ont été déposées en ce sens par le présent déposant, par exemple la demande publiée sous le numéro FR 2 964 086.

L'utilisation d'une RAT permet de répondre aux exigences réglementaires en matière de source de puissance de secours. Cependant, cet équipement n'est pas utilisable dans les conditions de vol standard ou au sol.

Les inconvénients principaux des équipements connus pour répondre au besoin de fourniture de puissance complémentaires résident dans la charge inutile en vol de ces équipements et dans les contraintes de maintenance forte, en particulier pour la RAT.

### EXPOSÉ DE L'INVENTION

L'invention vise à palier ces inconvénients par suppression de la RAT en proposant de dédier également le groupe APU à l'apport de puissance de secours à la place de la RAT. Pour que le groupe APU puisse assurer pleinement sa fonction d'équipement de secours, il est prévu que cet APU soit préservé de la principale cause de panne commune avec les moteurs - à savoir la contamination par le carburant - par la mise en place d'un approvisionnement spécifique en carburant.

Plus précisément, la présente invention a pour objet un procédé de fourniture de puissance auxiliaire à un aéronef, équipé de moteurs principaux et de consommateurs d'énergie, par un groupe auxiliaire de puissance de type APU, dans lequel le groupe APU est utilisé en mode principal pour fournir de la puissance non propulsive aux consommateurs de l'aéronef à partir d'une source en carburant commune aux moteurs de l'aéronef et au groupe APU, suivi d'une circulation de base de ce carburant commun jusqu'à l'APU. Dans ce procédé, le groupe APU est également utilisé dans un mode d'urgence pour apporter de la puissance de secours à des systèmes vitaux de l'aéronef. Le groupe APU est alors approvisionné en carburant de secours à partir d'une source spécifique selon une circulation indépendante et séparée, au moins dans une partie en liaison avec la source spécifique, de la circulation de base.

De préférence, le carburant de secours est de nature différente du carburant commun. De plus, en cas d'apport de puissance en mode d'urgence, le carburant de secours peut être injecté - pour sa combustion dans l'APU - de manière séparée de l'injection du carburant commun en mode principal.

Plus particulièrement, le carburant commun - utilisé en mode principal - étant du kérosène, le carburant de secours - utilisé en mode d'urgence - peut être de l'hydrogène. L'hydrogène est soit directement stocké à l'état solide, liquide ou gazeux dans la source spécifique, soit produit par un raffinage approprié de kérosène stocké dans cette source spécifique.

Avantageusement, le stockage de l'hydrogène est réalisé sous une forme solide, particulièrement stable et qui permet un changement d'état quasi-instantané sous forme liquide ou gazeux par un allumage pyrotechnique.

Lors d'une détection de panne, le mode d'urgence est déclenché par une commande centralisée qui libère le carburant de secours, purge les circulations de carburant, régule le débit de carburant spécifique et, le cas échéant, bascule la circulation indépendante dans la circulation de base et provoque la mise à feu de l'APU.

L'invention se rapporte également à une architecture de fourniture de puissance auxiliaire à un aéronef apte à mettre en oeuvre le procédé ci-dessus. Cette architecture comporte un groupe APU et un circuit de base d'approvisionnement en carburant, comprenant un réservoir de stockage de carburant commun à l'ensemble de propulsion de l'aéronef incluant le groupe APU, un conduit primaire de circulation du carburant commun et des conduits secondaires d'injection de ce carburant en chambres de combustion du groupe APU par des injecteurs appropriés. Ladite architecture comporte également un autre circuit d'approvisionnement du groupe APU en carburant. Ce circuit indépendant comprend un réservoir de secours, un conduit primaire spécifique de circulation du carburant de secours et des conduits secondaires d'injection du carburant de secours dans les chambres de combustion du groupe APU par des injecteurs appropriés.

Selon des modes de réalisation préférés :
- le carburant de secours étant de l'hydrogène, le circuit primaire spécifique peut comporter une installation de raffinage de kérosène, stocké dans le réservoir, en hydrogène via un réformeur ;
- les conduits secondaires d'injection des carburants du circuit de base et du circuit indépendant sont soit distincts, avec des injecteurs dédiés au carburant commun et d'autres injecteurs dédiés au carburant de secours, soit regroupés de sorte que, les conduits primaires et les conduits secondaires étant montés respectivement en amont et en aval d'une vanne de bascule, les conduits secondaires font circuler le carburant commun ou le carburant de secours jusqu'à des injecteurs communs aux carburants ;
- le réservoir de secours, qui comporte une partie de stockage d'hydrogène à l'état solide et une partie de stockage tampon d'hydrogène à l'état de gaz, est associé à un générateur pyrotechnique ainsi qu'à une vanne de régulation montée sur le conduit primaire en sortie de gaz d'hydrogène ;
- l'architecture comporte également une unité de commande électronique de secours qui pilote la vanne de régulation du débit d'hydrogène, le générateur pyrotechnique ainsi que l'APU sur la base d'informations d'ouverture de vanne et de pression au niveau de l'APU ;
- un système de purge à forte pression, piloté par l'unité de commande électronique, est destiné à évacuer des résidus de circuits.

### BRÈVE DESCRIPTION DES FIGURES

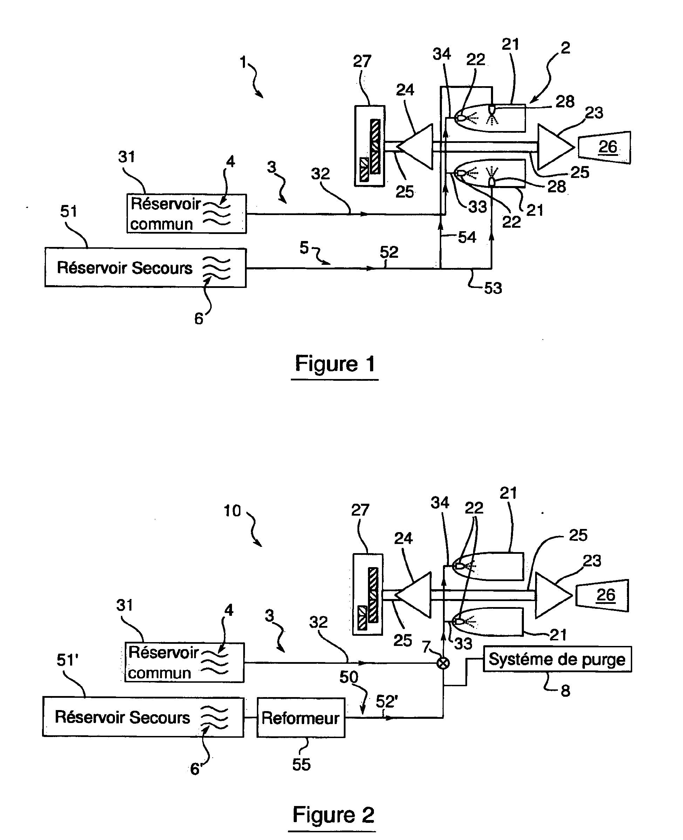

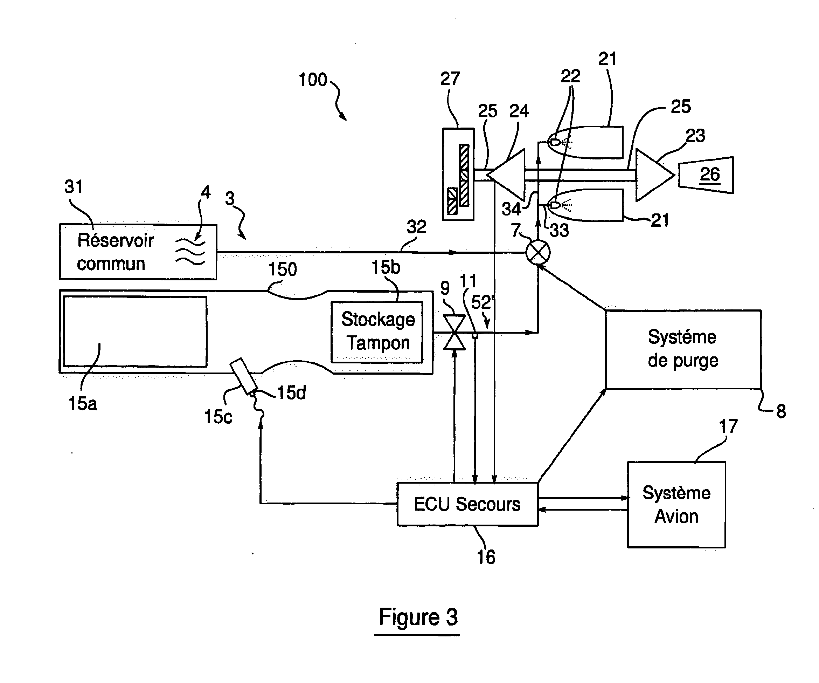

D'autres aspects, caractéristiques et avantages de l'invention apparaîtront dans la description non limitative qui suit, relative à des exemples de réalisation particuliers, en référence aux dessins annexés qui représentent, respectivement :
- en figure 1, le schéma d'un exemple d'architecture selon l'invention comportant un circuit indépendant d'approvisionnement en hydrogène comme carburant de secours stocké en réservoir ;
- la figure 2, le schéma d'un autre exemple d'architecture selon l'invention comportant un circuit indépendant d'approvisionnement en hydrogène fourni par raffinage de kérosène, les circuits de base et indépendant se regroupant pour injecter du carburant via une vanne de bascule, et
- en figure 3, le schéma d'un autre exemple d'architecture selon l'invention comportant un circuit indépendant d'approvisionnement en hydrogène solide comme carburant de secours stocké en réservoir et des moyens de commande et de régulation du circuit indépendant.

### DESCRIPTION DETAILLEE DE MODES DE REALISATION

Dans le présent texte, les termes « amont » et « aval » se rapportent à des localisations en fonction du sens de circulation du carburant. Des signes de référence identiques sur différentes figures renvoient aux mêmes éléments définis dans les passages correspondants de la description.

En référence au schéma de la figure 1, l'exemple d'architecture 1 de fourniture de puissance auxiliaire à un aéronef comporte un groupe APU 2 et un circuit de base 3 d'alimentation en carburant 4 du groupe APU 2. Ce circuit comprend un réservoir 31 de stockage de carburant, du kérosène dans l'exemple, pour un approvisionnement commun aux moteurs de l'aéronef (non représentés) et au groupe APU 2. Il comprend également un conduit primaire 32 de circulation du carburant commun, et des conduits secondaires 33, 34 d'injection de ce carburant 4 dans les chambres de combustion 21 du groupe APU 2. Ces injections sont réalisées par des injecteurs 22.

Le groupe APU 2 comprend un générateur de gaz, composé d'une turbine 23 d'entraînement d'un compresseur d'air 24 via un arbre de transmission 25, et une tuyère 26 d'éjection des gaz. Sur l'arbre de transmission 25 est monté une boîte d'accessoires 27 qui transmet alors de la puissance mécanique aux consommateurs d'énergie (conditionnement d'air cabine, pressurisation, réseau électrique, circuit hydraulique, systèmes de contrôle de vol, etc.) via des pompes et alternateurs appropriés (non représentés).

En mode principal, de la puissance non propulsive est fournie aux consommateurs de l'aéronef par alimentation en kérosène à partir du réservoir commun 31 non seulement au sol, qui est la fonction première d'un APU, mais également en vol - pendant certaines ou toutes les phases de vol - en complément ou à la place des moteurs.

L'architecture 1 comporte également un circuit indépendant 5 d'approvisionnement du groupe APU 2, circuit totalement séparé du circuit de base 3 dans cet exemple. Ce circuit indépendant 5 comprend un réservoir de secours 51, pour le stockage du carburant de secours 6 - de l'hydrogène dans l'exemple -, un conduit primaire spécifique 52 de circulation du carburant de secours, et des conduits secondaires 53 et 54 d'injection du carburant de secours 6 dans les chambres de combustion 21 du groupe APU 2.

Les conduits 52 à 54 constituent une rampe spécifique calibrée pour l'hydrogène. Les injecteurs 28 du carburant de secours 6 via les conduits secondaires 53 et 54 sont également spécifiques, c'est-à-dire dédiés au carburant de secours 6. Mais ils peuvent être identiques dans leur structure lorsque le carburant de secours 6 est de même nature que le carburant commun 4, par exemple du kérosène. Un système d'allumage dédié peut être associé à la rampe spécifique. Cependant, dans la mesure du possible, l'utilisation du système d'allumage principal est privilégié.

Le stockage de l'hydrogène peut être réalisé sous forme solide, liquide ou gazeuse. Avantageusement, le stockage sous forme solide présente une grande stabilité ainsi qu'une rapidité quasi-instantanée de mise en oeuvre, par exemple avec un générateur pyrotechnique (voir l'exemple d'architecture en référence à la figure 3). De plus, un tel générateur simplifie les opérations de maintenance et permet alors un gain en temps.

En mode d'urgence, le circuit indépendant 5 est sollicité pour fournir un carburant spécifique 6 - non contaminé ni contaminable par le carburant commun 4 - aux systèmes vitaux (systèmes de contrôle, instrumentation, etc.) en liaison avec la boîte d'accessoires 27.

Un autre exemple d'architecture selon l'invention est illustré par le schéma de la figure 2. Dans cette architecture 10, le même circuit de base 3 est intégré, avec son réservoir commun 31, ses conduits primaire 32 et secondaires 33, 34 et ses injecteurs 22.

Le circuit indépendant 50 comporte un réservoir de secours 51' et un conduit primaire spécifique 52' de circulation du carburant de secours. Le réservoir 51' et le conduit 52' ont les mêmes fonctions que le réservoir 51 et le conduit 52 de l'exemple précédent. Le réservoir 51' stocke du kérosène 6' et une installation 55 de raffinage du kérosène en hydrogène via un réformeur catalytique est intégrée dans le circuit primaire 52'. Un tel reformage catalytique est par exemple décrit dans le document de brevet WO2009/040112.

Dans le présent exemple, les deux circuits de base 3 et indépendant 50 sont partiellement séparés : ces circuits mutualisent en effet leurs conduits secondaires, par exemple en reprenant les conduits 33 et 34 du circuit de base (ou les conduits secondaires du circuit indépendant) par le montage aval de ces conduits sur une vanne de bascule 7. Cette vanne permet de basculer entre un approvisionnement en carburant commun, le kérosène, et en carburant de secours, l'hydrogène dans l'exemple. Selon la commande de position transmise à la vanne 7, les conduits secondaires injectent alors le kérosène du circuit de base 3 ou l'hydrogène du circuit indépendant 50 dans les chambres de combustion 21.

Cette commande dépend des détections de panne ou de situation de secours qui détermine le mode de fonctionnement, mode principal ou de secours. Un exemple de commande de mode en fonction des détections sera décrit plus loin.

Afin d'approvisionner les conduits secondaires en kérosène ou en hydrogène, selon le mode de fonctionnement, les conduits primaires 32 et 52' des circuits de base 3 et indépendant 50 sont couplés en amont sur la vanne de bascule 7.

De plus, un système de purge 8 est avantageusement ajouté pour le bon fonctionnement des circuits. Ce système de purge peut être soit de l'air à haute pression, soit une solution chimique à haute pression.

Un troisième exemple d'architecture selon l'invention est illustré par le schéma de la figure 3. Cette architecture 100 comporte un circuit indépendant 15 d'approvisionnement en hydrogène solide comme carburant de secours - du type décrit précédemment en référence à la figure 2 - avec un conduit primaire 52' et des conduits secondaires en commun avec ceux du circuit de base 3, tels que décrits précédemment en référence à la figure 2.

L'hydrogène est stocké dans un réservoir de secours 150 qui comporte une partie de stockage 15a de l'hydrogène à l'état solide et une partie de stockage tampon 15b de l'hydrogène à l'état de gaz. La présence de cette zone tampon garantit un niveau de pressurisation. Un générateur de gaz pyrotechnique 15c, qui comporte une cartouche 15d de mise à feu d'un bloc de propergol, est couplé au réservoir 150. En sortie du réservoir 150, une vanne de régulation 9 est montée sur le conduit primaire 52'.

Les conduits primaires 32 et 52', respectivement des circuits de base 3 et indépendant 150, sont montés en amont sur la vanne de bascule 7 comme dans la configuration de la figure 2. Cette vanne est par exemple une vanne à dynamique rapide électromécanique, ou une vanne guillotine à déclenchement électromécanique ou pyrotechnique. De même, les conduits secondaires mutualisés 33 et 34 sont montés en aval de la vanne 7 pour alimenter les injecteurs 22. Le circuit indépendant 150 n'est donc séparé du circuit de base 3 que dans sa partie primaire, ce qui reste essentiel pour préserver la non contamination du carburant de secours.

L'architecture 100 comporte également une unité de commande électronique de secours 16, en abrégé ECU (initiales de « Electronic Control Unit » en terminologie anglaise), qui pilote la vanne 9 de régulation du débit d'hydrogène, le générateur pyrotechnique 15c ainsi que la mise à feu éventuelle du groupe APU 2. Ce pilotage est réalisé sur la base des informations d'ouverture de la vanne 9 fournies par un capteur 11 et de pression au niveau du compresseur 24 de l'APU 2. L'unité de commande 16 communique également avec le centre de pilotage 17 dit système avion. L'ECU de secours peut être une unité redondée par rapport à l'ECU principal de l'aéronef, ou une carte particulière de l'ECU principal dédiée à la fonction de secours avec un dispositif d'alimentation spécifique.

Comme dans l'exemple précédent, un système de purge à forte pression 8 est piloté par l'unité ECU de secours 16 pour évacuer les résidus qui risquent de boucher les circuits. Ce système est par exemple basé sur un système de pressurisation haute pression, généré soit par une bouteille d'air comprimé à 300 bars soit un générateur de gaz inerte à 700 bars. Son déclenchement peut se faire par un dispositif identique à celui de la génération d'hydrogène solide.

Lors d'une détection de panne, par exemple d'une panne d'alimentation électrique, le système avion 17 transmet un ordre de bascule en mode secours à l'ECU de secours 16. La bascule en mode de secours se fait suivant la procédure actuelle de déclenchement de la RAT. L'ECU 16 déclenche ensuite la mise à feu de la cartouche pyrotechnique 15d de génération d'hydrogène et du système de purge 8, fait suivre l'ordre de bascule à la vanne 7, pilote la vanne de régulation d'hydrogène 9 pour régler le débit d'hydrogène, ainsi que la mise en rotation et l'allumage de l'APU 2. Le pilotage de l'APU 2 en mode de secours se fait via l'ECU 16.

L'invention n'est pas limitée aux exemples décrits et représentés.

Il est par exemple possible de combiner l'une des sources de carburant de secours décrites ci-dessus avec l'une quelconque des configurations d'injection de carburant dans les chambres de combustion du groupe APU, telles qu'exposées plus haut.

Par ailleurs, les moyens d'injection peuvent être combinés à des moyens de mélange de deux carburants distincts, un carburant commun et un carburant de secours. Les vannes de bascule ou de régulation peuvent être remplacées par tout moyen de sélection ou de réglage de débit équivalent.

## Revendications

1. Procédé de fourniture de puissance auxiliaire à un aéronef, équipé de moteurs principaux et de consommateurs d'énergie, par un groupe auxiliaire de puissance de type APU (2) muni d'une chambre de combustion (21), dans lequel le groupe APU (2) est utilisé en mode principal pour fournir de la puissance non propulsive aux consommateurs de l'aéronef à partir d'une source (31) en carburant (4) commune aux moteurs de l'aéronef et au groupe APU (2), suivi d'une circulation de base (3) de ce carburant commun (4) jusqu'à la chambre de combustion (21) de l'APU, **caractérisé en ce que** le groupe APU (2) est également utilisé dans un mode d'urgence pour apporter de la puissance de secours à des systèmes vitaux de l'aéronef, la chambre de combustion (21) du groupe APU (2) étant alors approvisionnée en carburant de secours (6, 6') à partir d'une source spécifique (51, 51') selon une circulation indépendante et séparée, au moins dans une partie en liaison avec la source spécifique (52, 52'), de la circulation de base (3).

2. Procédé de fourniture selon la revendication précédente, dans lequel, en cas d'apport de puissance en mode d'urgence, le carburant de secours (6, 6') est injecté (28), pour sa combustion dans l'APU (2), de manière séparée de l'injection (22) du carburant commun (4) en mode principal.

3. Procédé de fourniture selon l'une des revendications précédentes dans lequel, le carburant commun (4) étant du kérosène, le carburant de secours (6) est de l'hydrogène directement stocké à l'état solide, liquide ou gazeux dans la source spécifique (51).

4. Procédé de fourniture selon la revendication 3, dans lequel l'hydrogène est produit par un raffinage approprié de kérosène (6') stocké dans la source spécifique (51, 51').

5. Procédé de fourniture selon l'une des revendications précédentes dans lequel, lors d'une détection de panne, le mode d'urgence est déclenché par une commande centralisée (16) qui libère (15c) le carburant de secours (6), purge (8) les circulations de carburant, régule (9) le débit de carburant spécifique et, le cas échéant, bascule (7) la circulation indépendante (50, 15) dans la circulation de base (3) et provoque la mise à feu de l'APU (2).

6. Architecture de fourniture de puissance de mise en oeuvre du procédé selon l'une des revendications précédentes, comportant un groupe APU (2) et un circuit de base (3) d'approvisionnement en carburant (4), comprenant un réservoir de stockage (31) de carburant (4) commun à l'ensemble de propulsion de l'aéronef incluant le groupe APU (2), un conduit primaire (32) de circulation du carburant commun (4) et des conduits secondaires (33, 34) d'injection de ce carburant (4) en chambre de combustion (21) du groupe APU (2) par des injecteurs appropriés (22), cette architecture (1, 10, 100) est **caractérisé en ce qu'**elle comporte également un autre circuit (5, 50, 15) d'approvisionnement du groupe APU (2) en carburant (6, 6'), ce circuit indépendant (5, 50, 15) comprenant un réservoir de secours (51, 51', 150), un conduit primaire spécifique (52, 52') de circulation du carburant de secours (6, 6') et des conduits secondaires (53, 54) d'injection du carburant de secours (6, 6') dans la chambre de combustion (21) du groupe APU (2) par des injecteurs appropriés (28).

7. Architecture de fourniture de puissance selon la revendication précédente, dans laquelle, le carburant de secours étant de l'hydrogène, le circuit primaire spécifique (52') comporte une installation (55) de raffinage de kérosène (6'), stocké dans le réservoir (51'), en hydrogène via un réformeur.

8. Architecture de fourniture de puissance selon l'une des revendications 6 ou 7, dans laquelle les conduits secondaires (33, 34 ; 53, 54) d'injection des carburants (4 ; 6, 6') du circuit de base (3) et du circuit indépendant (5) sont distincts, avec des injecteurs (22) dédiés au carburant commun (4) et d'autres injecteurs (28) dédiés au carburant de secours (6, 6').

9. Architecture de fourniture de puissance selon l'une des revendications 6 ou 7, dans laquelle les conduits secondaires (33, 34 ; 53, 54) d'injection des carburants (4, 6) du circuit de base (3) et du circuit indépendant (50, 15) sont regroupés de sorte que, les conduits primaires (32, 52') et les conduits secondaires (33, 34) étant montés respectivement en amont et en aval d'une vanne de bascule (7), les conduits secondaires (33, 34) font circuler le carburant commun (4) ou le carburant de secours (6) jusqu'à des injecteurs (22) communs à ces carburants.

10. Architecture de fourniture de puissance selon l'une des revendications 8 ou 9, dans laquelle le réservoir de secours (150) comporte une partie de stockage d'hydrogène à l'état solide (15a) et une partie de stockage tampon d'hydrogène à l'état de gaz (15b), est associé à un générateur pyrotechnique (15c) ainsi qu'à une vanne de régulation (9) montée sur le conduit primaire (52') en sortie de gaz d'hydrogène.

11. Architecture de fourniture de puissance selon l'une des revendications 6 à 10, dans laquelle l'architecture comporte également une unité de commande électronique de secours (16) qui pilote la vanne de régulation (9) du débit d'hydrogène, le générateur pyrotechnique (15c) ainsi que l'APU (2) sur la base d'informations d'ouverture de vanne (9) et de pression au niveau de l'APU (2).

12. Architecture de fourniture de puissance selon l'une des revendications 6 à 11, dans laquelle un système à forte pression, piloté par l'unité de commande électronique (16), est destiné à évacuer des résidus de circuits.

## Patentansprüche

1. Verfahren zur Einspeisung von Notfallenergie in ein Luftfahrzeug, das mit Hauptantriebsmotoren und Energieverbrauchern ausgerüstet ist, durch ein Notfallenergieaggregat des Typs APU (2), das mit einer Brennkammer (21) ausgestattet ist, wobei das APU-Aggregat (2) im Hauptmodus verwendet wird, um ausgehend von einer Quelle (31) für Treibstoff (4), die den Motoren des Luftfahrzeugs und dem APU-Aggregat (2) gemeinsam ist, Nichtantriebsenergie in die Verbraucher des Luftfahrzeugs einzuspeisen, gefolgt von einem Grundkreislauf (3) dieses gemeinsamen Treibstoffs (4) bis zur Brennkammer (21) des APU, **dadurch gekennzeichnet, dass** das APU-Aggregat (2) gleichermaßen in einem Notfallmodus verwendet wird, um lebenswichtigen Systemen des Luftfahrzeugs Notfallenergie zuzuführen, wobei die Brennkammer (21) des APU-Aggregats (2) dann mit Notfalltreibstoff (6, 6') von einer spezifischen Quelle (51, 51') aus über einen unabhängigen und getrennten Kreislauf versorgt wird, der mindestens in einem Teil mit der spezifischen Quelle (52, 52') des Grundkreislaufs (3) in Verbindung steht.

2. Einspeisungsverfahren nach dem vorhergehenden Anspruch, wobei im Fall einer Energiezufuhr im Notfallmodus der Notfalltreibstoff (6, 6') zu seiner Verbrennung in dem APU (2) von der Einspritzung (22) des gemeinsamen Treibstoffs (4) im Hauptmodus getrennt eingespritzt wird (28).

3. Einspeisungsverfahren nach einem der vorhergehenden Ansprüche, wobei der gemeinsame Treibstoff (4) Kerosin ist und der Notfalltreibstoff (6) Wasserstoff ist, der direkt im festen, flüssigen oder gasförmigen Zustand in der spezifischen Quelle (51) gespeichert wird.

4. Einspeisungsverfahren nach Anspruch 3, wobei der Wasserstoff durch eine entsprechende Raffinierung von Kerosin (6') erzeugt wird, das in der spezifischen Quelle (51, 51') gespeichert ist.

5. Einspeisungsverfahren nach einem der vorhergehenden Ansprüche, wobei während einer Fehlererkennung der Notfallmodus durch eine zentrale Steuerung (16) ausgelöst wird, die den Notfalltreibstoff (6) freisetzt (15c), die Treibstoffkreisläufe spült (8), die Durchflussmenge des spezifischen Treibstoffs reguliert (9) und gegebenenfalls auf den unabhängigen Kreislauf (50, 15) in dem Grundkreislauf (3) umschaltet (7) und die Zündung des APU (2) veranlasst.

6. Aufbau einer Energieeinspeisung zum Umsetzen des Verfahrens gemäß einem der vorhergehenden Ansprüche, enthaltend ein APU-Aggregat (2) und einen Grundkreislauf (3) zur Versorgung mit Treibstoff (4), der einen Tank zur Speicherung (31) von Treibstoff (4) aufweist, der der Antriebseinheit des Luftfahrzeugs einschließlich des APU-Aggregats (2) gemeinsam ist, eine primäre Kreislaufleitung (32) des gemeinsamen Treibstoffs (4) und sekundäre Leitungen (33, 34) zur Einspritzung dieses Treibstoffs (4) in die Brennkammer (21) des APU-Aggregats (2) durch entsprechende Einspritzdüsen (22), wobei dieser Aufbau (1, 10, 100) **dadurch gekennzeichnet ist, dass** er auch einen weiteren Kreislauf (5, 50, 15) zur Versorgung des APU-Aggregats (2) mit Treibstoff (6, 6') aufweist, wobei dieser unabhängige Kreislauf (5, 50, 15) einen Notfalltank (51, 51', 150), eine primäre Leitung, die spezifisch (52, 52') ist für den Kreislauf des Notfalltreibstoffs (6, 6'), und sekundäre Leitungen (53, 54) zur Einspritzung des Notfalltreibstoffs (6, 6') in die Brennkammer (21) des APU-Aggregats (2) durch entsprechende Einspritzdüsen (28) aufweist.

7. Aufbau einer Energieeinspeisung nach dem vorhergehenden Anspruch, wobei der Notfalltreibstoff Wasserstoff ist, wobei der primäre spezifische Kreislauf (52') eine Installation (55) zur Raffinierung von Kerosin (6'), das in dem Tank (51') gespeichert ist, mittels eines Reformers in Wasserstoff aufweist.

8. Aufbau einer Energieeinspeisung nach einem der Ansprüche 6 oder 7, wobei die sekundären Leitungen (33, 34; 53, 54) zur Einspritzung der Treibstoffe (4; 6, 6') des Grundkreislaufs (3) und des unabhängigen Kreislaufs (5) verschieden sind, mit Einspritzdüsen (22), die für den gemeinsamen Treibstoff (4) bestimmt sind, und anderen Einspritzdüsen (28), die für den Notfalltreibstoff (6, 6') bestimmt sind.

9. Aufbau einer Energieeinspeisung nach einem der Ansprüche 6 oder 7, wobei die sekundären Leitungen (33, 34; 53, 54) zur Einspritzung der Treibstoffe (4, 6) des Grundkreislaufs (3) und des unabhängigen Kreislaufs (50, 15) so zusammengefasst sind, dass die primären Leitungen (32, 52') und die sekundären Leitungen (33, 34) einem Klappenventil (7) jeweils vorgelagert und nachgelagert angebracht sind, wobei die sekundären Leitungen (33, 34) den gemeinsamen Treibstoff (4) oder den Notfalltreibstoff (6) bis zu den Einspritzdüsen (22) fördern, die diesen Treibstoffen gemeinsam sind.

10. Aufbau einer Energieeinspeisung nach einem der Ansprüche 8 oder 9, wobei der Notfalltreibstofftank (150), der einen Teil zur Wasserstoffspeicherung im festen Zustand (15a) und einen Teil zur Wasserstoff-Pufferspeicherung im gasförmigen Zustand (15b) aufweist, mit einem pyrotechnischen Generator (15c) sowie einem Reglerventil (9) verbunden ist, das an der primären Leitung (52') am Wasserstoffgasauslass angebracht ist.

11. Aufbau einer Energieeinspeisung nach einem der Ansprüche 6 bis 10, wobei der Aufbau ferner eine elektronische Notfallsteuerungseinheit (16) aufweist, die das Reglerventil (9) für den Wasserstoffdurchfluss, den pyrotechnischen Generator (15c) sowie das APU (2) auf der Grundlage von Informationen zur Öffnung des Ventils (9) und zum Druck auf Ebene des APU (2) steuert.

12. Aufbau einer Energieeinspeisung nach einem der Ansprüche 6 bis 11, wobei ein Hochdrucksystem, das durch die elektronische Steuerungseinheit (16) gesteuert wird, dazu dient, Rückstände in den Kreisläufen abzuführen.

## Claims

1. An auxiliary power supply method for an aircraft, being equipped with main engines and power consumers, through an auxiliary APU type power supply unit (2), provided with a combustion chamber (21), wherein the APU unit (2) is used in a primary mode to supply non propulsive power to consumers of the aircraft from a source (31) of fuel (4) being common to the engines of the aircraft and to the APU unit (2), being followed by a basic circulation (3) of such common fuel (4) up to the combustion chamber (21) of the APU unit, **characterized in that** the APU unit (2) is also used in an emergency mode so as to bring emergency power to the vital systems of the aircraft, the combustion chamber (21) of the APU unit (2) being then supplied with emergency fuel (6, 6') from a specific source (51, 51') according to an independent circulation being separated, at least in one part connected with the specific source (52, 52'), from the basic circulation (3).

2. The supply method according to the preceding claim, wherein, in case of a power supply in an emergency mode, the emergency fuel can be injected, for the combustion thereof in the APU unit (2), separately from the common fuel (4) injection (22) in the primary mode.

3. The supply method according to any of preceding claims, wherein, the common fuel (4) being kerosene, the emergency fuel (6) is hydrogen being directly stocked in the solid, liquid or gaseous state within the specific source (51).

4. The supply method according to claim 3, wherein the hydrogen is produced with an appropriate refining of kerosene (6') being stocked within the specific source (51, 51').

5. The supply method according to any of preceding claims, wherein, upon failure detection, the emergency mode is triggered by a centralized command (16) that releases (15c) the emergency fuel (6), drains (8) the fuel circulations, controls (9) the specific fuel flow rate and, the case being, switches (7) the independent circulation (50, 15) into the basic circulation (3) and leads to APU (2) firing.

6. A power supply architecture for implementing the method according to any of preceding claims, comprising an APU unit (2) and a fuel (4) supply basic circuit (3), comprising a common fuel (4) storage tank (31) for the aircraft propulsion assembly including the APU unit (2), a primary circulation conduct (32) for the common fuel (4) and secondary conducts (33, 34) for injecting such fuel (4) into the combustion chamber (21) of the APU unit (2) through appropriate injectors (22), such architecture (1, 10, 100) being **characterized in that** it also comprises another fuel supply circuit (5, 50, 15) to supply the APU unit (2) with fuel (6, 6'), such independent circuit (5, 50, 15) comprising an emergency tank (51, 51', 150), a specific primary conduct (52, 52') for emergency fuel (6, 6') circulation and secondary conducts (53, 54) for injecting emergency fuel (6, 6') into the combustion chamber (21) of the APU unit (2) through appropriate injectors (28).

7. The power supply architecture according to preceding claim, wherein, the emergency fuel being hydrogen, the specific primary circuit (52') comprises a refining arrangement (55) for converting kerosene (6') being stocked in the tank (51') into hydrogen via a reformer.

8. The power supply architecture according to any of claims 6 or 7, wherein the fuel (4; 6, 6') injection secondary conducts (33, 34; 53, 54) for the basic circuit (3) and the independent circuit (5) are distinct, with injectors (22) being dedicated to the common fuel (4) and other injectors (28) dedicated to the emergency fuel (6, 6').

9. The power supply architecture according to any of claims 6 or 7, wherein the fuel (4, 6) injection secondary conducts (33, 34; 53, 54) for the basic circuit (3) and the independent circuit (50, 15) are grouped together so that, the primary (32, 32') and secondary (33, 34) conducts being respectively mounted upstream and downstream from a switching valve (7), the secondary conducts (33, 34) circulate the common fuel (4) or the emergency fuel (6) up to the injectors (22) being common to such fuels.

10. The power supply architecture according to any of claims 8 or 9, wherein the emergency tank (150), comprises one storage part (15a) for hydrogen in a solid state and one buffer storage part (15b) for hydrogen in a gas state and is associated with a pyrotechnical generator (15c) as well as to a control valve (9) mounted on the primary conduct (52') on a hydrogen gas output.

11. The power supply architecture according to any of claims 6 to 10, wherein the architecture also comprises an emergency electronic command unit (16) piloting the hydrogen flow rate control valve (9), the pyrotechnical generator (15c) as well as the APU unit (2) based on information as regards valve opening and pressure at the APU (2) level.

12. The power supply architecture according to any of claims 6 to 11, wherein a strong pressure draining system piloted by the electronic command unit (16) is provided for draining circuit residues.
